# EUROPEAN PATENT APPLICATION

(11) **EP 4 801 104 A1**
(43) Date of publication of application: **02.09.2026**
(21) Application number: 23956758.9
(22) Date of filing: 24.10.2023
(51) Int. Cl.: H04W 28/06, H04W 72/0446

(54) **COMMUNICATION DEVICE AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); NAGATA, Satoshi, Tokyo 100-6150 (JP); LIU, Wenjia, Beijing, 100190 (CN); HOU, Xiaolin, Beijing, 100190 (CN); WANG, Jing, Beijing, 100190 (CN); PI, Qiping, Beijing, 100190 (CN); CHEN, Lan, Beijing, 100190 (CN)
(74) Representative: Hoffmann Eitle
(86) International application number: PCT/JP2023/038387
(87) International publication number: WO 2025/088703

(57) **Abstract**

A communication device includes: a control unit configured to generate a transmission signal of block-wise transmission in which a boundary between symbols of a transmission signal of OFDM (Orthogonal Frequency Division Multiplexing) symbol-wise transmission is aligned with an edge of the transmission signal of the block-wise transmission; and a transmission unit configured to transmit the transmission signal of the block-wise transmission in a frequency band higher than a certain frequency. The control unit includes at least one of a header or a tail in the transmission signal of the block-wise transmission.

## Description

### TECHNICAL FIELD

The present invention relates to a communication device and a communication method in a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Literature 1 and Non-Patent Literature 2).

In addition, various requirements for the next generation "6G" are being discussed. For example, the requirements include ultra broadband communication, mission critical communication, ultra massive connection, universal coverage, intelligent connection, ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

### CITATION LIST

### Non-Patent Literature

Non-Patent Literature 1: 3GPP TS 38.300 V17.6.0 (2023-09)
Non-Patent Literature 2: 3GPP TS 38.401 V17.6.0 (2023-09)
Non-Patent Literature 3: 3GPP TR 38.901 V17.0.0 (2022-03)
Non-Patent Literature 4: 3GPP TS 38.211 V17.6.0 (2023-09)
Non-Patent Literature 5: W. Hedhly, O. Amin, B. Shihada and M. -S. Alouini, "A Power Saving Scheme for IEEE 802.15.3d THz Wireless Communication Links," in IEEE Transactions on Mobile Computing, vol. 22, no. 4, pp. 1912-1921, 1 April 2023
Non-Patent Literature 6: V. Petrov, T. Kurner and I. Hosako, "IEEE 802.15.3d: First Standardization Efforts for Sub-terahertz Band Communications toward 6G," in IEEE Communications Magazine, vol. 58, no. 11, pp. 28-33, November 2020
Non-Patent Literature 7: E. L. Cid, M. G. Sanchez and A. V. Alejos, "Wideband Analysis of the Satellite Communication Channel at Ku- and X-Bands," in IEEE Transactions on Vehicular Technology, vol. 65, no. 4, pp. 2787-2790, April 2016
Non-Patent Literature 8: https://radionavlab.ae.utexas.edu/wp-content/uploads/2023/01/starlink_structure.pdf

### SUMMARY OF INVENTION

### TECHNICAL PROBLEM

In the next generation wireless communication system, higher frequencies such as sub-terahertz band are expected to be used, and a scenario of NTN (Non-terrestrial network) is expected to be used, and thus, for example, environments related to delay are expected to be significantly different from the current wireless communication system. The radio frame structure adapted to the above-described environments is required to be specified.

The present invention has been made in view of the above points and is intended to use a radio frame structure adapted to the environments related to delay in the wireless communication system.

### SOLUTION TO PROBLEM

According to the disclosed technique, a communication device is provided. The communication device includes: a control unit configured to generate a transmission signal of block-wise transmission in which a boundary between symbols of a transmission signal of OFDM (Orthogonal Frequency Division Multiplexing) symbol-wise transmission is aligned with an edge of the transmission of the block-wise transmission; and a transmission unit configured to transmit the transmission signal of the block-wise transmission in a frequency band higher than a certain frequency. The control unit includes at least one of a header or a tail in the transmission signal of the block-wise transmission.

### ADVANTAGEOUS EFFECTS OF INVENTION

According to the disclosed technique, a radio frame structure adapted to the environments related to delay can be used in the wireless communication system.

### BRIEF DESCRIPTION OF DRAWINGS

[Fig. 1] is a drawing illustrating a configuration example of a wireless communication system in an embodiment of the present invention.
[Fig. 2] is a drawing for describing an example of the CP length and delay spread.
[Fig. 3] is a drawing for describing an example (1) of the CP length in an embodiment of the present invention.
[Fig. 4] is a drawing for describing an example (2) of the CP length in an embodiment of the present invention.
[Fig. 5] is a drawing for describing an example (1) of the CP length and delay spread in an embodiment of the present invention.
[Fig. 6] is a drawing for describing an example (2) of the CP length and delay spread in an embodiment of the present invention.
[Fig. 7] is a drawing for describing an example of CP locations in an embodiment of the present invention.
[Fig. 8] is a drawing for describing a configuration example (1) of the CP length in an embodiment of the present invention.
[Fig. 9] is a drawing for describing a configuration example (2) of the CP length in an embodiment of the present invention.
[Fig. 10] is a drawing for describing an example (1) of CP addition in an embodiment of the present invention.
[Fig. 11] is a drawing for describing an example (2) of CP addition in an embodiment of the present invention.
[Fig. 12] is a drawing for describing an example (3) of CP addition in an embodiment of the present invention.
[Fig. 13] is a drawing for describing an example (4) of CP addition in an embodiment of the present invention.
[Fig. 14] is a drawing for describing a block-wise example (1) in an embodiment of the present invention.
[Fig. 15] is a drawing for describing a block-wise example (2) in an embodiment of the present invention.
[Fig. 16] is a drawing for describing a block-wise example (3) in an embodiment of the present invention.
[Fig. 17] is a drawing for describing a block-wise example (4) in an embodiment of the present invention.
[Fig. 18] is a drawing for describing a block-wise example (5) in an embodiment of the present invention.
[Fig. 19] is a drawing for describing a block-wise example (6) in an embodiment of the present invention.
[Fig. 20] is a drawing for describing a block-wise example (7) in an embodiment of the present invention.
[Fig. 21] is a drawing for describing a block-wise example (8) in an embodiment of the present invention.
[Fig. 22] is a drawing for describing a block-wise example (9) in an embodiment of the present invention.
[Fig. 23] is a drawing for describing a block-wise example (10) in an embodiment of the present invention.
[Fig. 24] is a drawing illustrating an example of a functional structure of a base station 10 in an embodiment of the present invention.
[Fig. 25] is a drawing illustrating an example of a functional configuration of a terminal 20 in an embodiment of the present invention.
[Fig. 26] is a drawing illustrating an example of a hardware structure of the base station 10 or the terminal 20 in an embodiment of the present invention.
[Fig. 27] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

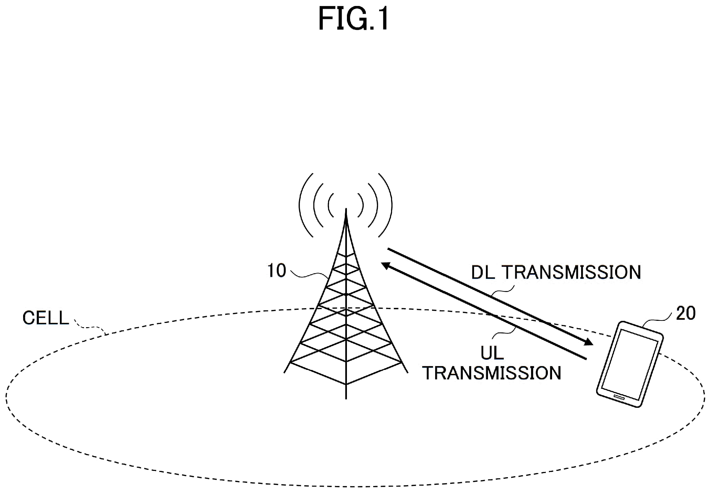

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, various requirements for the next generation "6G" are being discussed. For example, the requirements may include the ultra broadband communication, the mission critical communication, the ultra massive connection, the universal coverage, the intelligent connection, the ubiquitous sensing, and the like.

In addition, the requirements may include ultra high speed communication, large capacity communication, ultra coverage enhancement, ultra low energy consumption, low cost, ultra low latency, ultra high reliability communication, ultra many connection and sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

Here, the delay spread that is expected in NR has been between 16 ns and 1,148 ns under various scenario and carrier frequency conditions (refer to Non-Patent Literature 3). The delay profiles considered in Non-Patent Literature 3 have been: short-delay profile corresponding to the median RMS (Root mean square) delay spread for LOS (Line of sight) scenarios; normal-delay profile corresponding to the median RMS delay spread for NLOS (Non line of sight) scenarios; and longdelay profile corresponding to the 90^{th} percentile RMS delay spread for NLOS scenarios.

In NR, a radio frame is fixed to 10 ms. A subframe is fixed to 1 ms. A slot is defined as 14 OFDM symbols. The numerology and CP (Cyclic Prefix) length determine the structure of OFDM symbols in the time domain and the structure of PRB (Physical Resource Block) in the frequency domain. With respect to the numerology µ, {0, 1, 2, 3, 4, 5, 6} are defined. The SCS, the symbol length, and the slot length are determined by the numerology.

With respect to the CP length, the normal CP is 14 symbols per slot, and the extended CP is 12 symbols per slot. The extended CP is supported only for the 60 kHz SCS.

Table 1 is a table for describing the radio frame structure in NR (refer to Non-Patent Literature 4). It is to be noted that, hereinafter, "microsecond" will be also referred to as "us".

**[Table 1]**

| CP type | Normal CP: (144 *κ* · 2^{-*µ*} + 16 *κ*) *· T_{c}* for 0-th and 7-th symbol or 144 *κ* · 2⁻*^{µ} · T_{c}* for residual 12 symbols¹ | | | | | | | Extended CP: 512*κ ·* 2*^{-µ} · T_{c}* |
|---|---|---|---|---|---|---|---|---|
| Numerology *µ* | 0 | 1 | 2 | 3 | 4 | 5 | 6 | 2 |
| SCS² | 15 kHz | 30 kHz | 60 kHz | 120 kHz | 240 kHz | 480 kHz | 960 kHz | 60 kHz |
| OFDM symbol length (Data) 2048 *κ* · 2⁻*^{µ} · T_{c}* | 66.67 *µ* s | 33.33 *µ* s | 16.67 *µ* s | 8.33 *µ* s | 4.17 *µ* s | 2.08 *µ* s | 1.04 us | 16.67 *µ* s |
| CP-length | 5.21 *µ* s/ 4.69 *µ* s | 2.86 *µ* s/ 2.34 *µ* s | 1.69 *µ* s/ 1.17 *µ* s | 1.1 *µ* s/ 0.59 *µ* s | 0.81 *µ* s/ 0.29 *µ* s | 0.67 *µ s*/ 0.15 *µ* s | 0.59 *µ* s/ 0.07 *µ* s | 4.17 *µ* s |
| Slot-length | 1 ms | 0.5 ms | 0.25 ms | 0.125 ms | 0.0625 ms | 0.0312 ms | 0.0156 ms | 0.25 ms |
| | 14 symbols | | | | | | | 12 symbols |
| Note 1: Time units *T_{c}* = 1/(Δ*fₘₐₓ · N_{f}*) *where* Δ*fₘₐₓ* = 480 *kHz, N_{f}* = 4096. *Constant κ = Tₛ*/*T_{c}* = 64, where *Tₛ =* 1/(Δ*f_{ref} · N_{f,ref}*)*,* Δ*f_{ref}* = 15 *kHz and N_{f,ref}* = 2048. | | | | | | | | |
| Note 2: Numerology 0-2 for FR1, Numerology 2-4 for FR2-1 with 4 (240 kHz) only for SS/PBCH, Numerology 3-6 for FR2-2 | | | | | | | | |

As illustrated in Table 1, the CP length in the current NR varies in accordance with SCS and takes values from 70 ns to 4,690 ns, and the OFDM symbol length takes values from 1.04 µs to 66.67 µs.

Based on the numerology µ{0, 1, 2, 3, 4, 5, 6}, the SCS frequency is specified as 2^{µ} * 15 kHz, and SCS{15, 30, 60, 120, 240, 480, 960} corresponding to the numerology µ is specified. In addition, the number of symbols per slot corresponding to the numerology µ{0, 1, 2, 3, 4, 5, 6} is always 14, the number of slots per frame is {10, 20, 40, 80, 160, 320, 640}, and the number of slots per subframe is {1, 2, 4, 8, 16, 32, 64}. It is to be noted that, in a case of extended CP, µ is equal to 2, the number of symbols per slot is 14, the number of slots per frame is 40, and the number of slots per subframe is 4.

The delay spread in the sub-terahertz is expected to be several ns, and is significantly small when compared with the RMS delay spread for FR1 and FR2 in the NR channel model, for example. In addition, the coherent bandwidth is expected to reach about 60 GHz in a case where an antenna having high directivity is used (refer to Non-Patent Literature 5).

Operations described in the following 1) to 3) are being discussed in the standardization using sub-terahertz according to IEEE (registered trademark) 802.15.3d (refer to Non-Patent Literature 6).
1) The physical layer is specified to have the following two modes.
   - Single carrier mode (THz-SC PHY). Designed for the high data rates. The use cases include wireless fronthaul/backhaul and additional links in the data center, etc.
   - On-off keying mode (THz-OOK PHY). Used by low-cost sub-terahertz devices.
2) The channel bandwidth is 2.16 GHz * [1, 2, ..., 12]. Minimum 2.16 GHz and maximum 69.12 GHz per channel are supported. A single-carrier waveform is used for each channel and multi-carrier transmission can be performed by using a plurality of channels.
3) The frame format is PHY preamble + PHY header + MAC header + HCS (Header check sequence) + Header stuff bits + frame payload. Functions of the PHY preamble include aid frame detection, timing acquisition, and channel estimation at the receiver. The length of the PHY preamble is 2.91 µs for long preamble and 1.89 µs for short preamble.

The delay spread in NTN is expected to be: 19 ns to 219 ns for 11.2 GHz band; and 12 ns to 183 ns for 14.155 GHz band, for example (refer to Non-Patent Literature 7). The coherence bandwidth is expected to be: 4 MHz to 20 MHz for 11.2 GHz band; and 2 MHz to 37 MHz for 14.155 GHz band (refer to Non-Patent Literature 7).

In the Starlink (registered trademark) Ku-band FDD, the 2 GHz bandwidth from 10.7 GHz to 12.7 GHz is adopted for DL (refer to Non-Patent Literature 8). The number of channels is 8. Each channel has a bandwidth of 240 MHz including 10 MHz guard band. The SCS is 240 MHz/1,024 = 234.375 kHz for FFT size being 1,024 and the bandwidth of one channel is 240 MHz. With respect to the frame structure, one frame is 1/750 [s] = 1.3 [ms] and is composed of 302 symbols and a guard interval. The symbol length is (1,024 + 32)/240 MHz = 4.4 µs, the CP length is 32/240 MHz = 0.133 µs, and the data length is 1,024/240 MHz = 4.2667 µs. The guard interval is one symbol length + one CP = 4.533 µs.

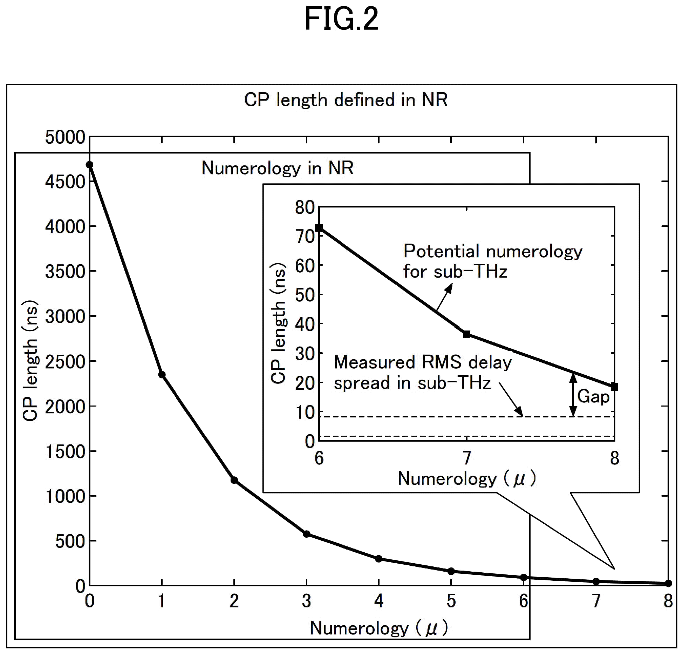

Fig. 2 is a drawing for describing an example of the CP length and delay spread. Fig. 2 illustrates the numerologies and CP lengths defined in NR. As illustrated in Fig. 2, in a case where the RMS delay spread in sub-terahertz is taken into account, the current CP lengths are too long even when the numerology is 6, 7, or 8. In addition, with respect to the SCSs of 960 kHz, 1,920 kHz, and 3,840 kHz that are expected to be used in sub-terahertz, the CP lengths are 73.2 ns, 36.6 ns, and 18.3 ns, which are too long for the terahertz band in which delay spread is expected to be several ns. In addition, the OFDM symbol length is significantly shortened as the SCS increases, and thus, the scheduling and transmission complexity increases.

In addition, the CP length for the SCS 240 kHz in NR is considered to be too long for the Ku-band NTN. The CP length for the SCS 240 kHz in NR is 0.29 µs, while the CP length for Starlink is 0.133 µs. In addition, the SCS for FR2-1 in NR is considered to be too small for the Ku-band NTN. In FR2-1, SCSs of 60 kHz and 120 kHz are supported. It is to be noted that the above-described SCSs are considered to be too small when large coherence bandwidth for NTN is taken into account.

Therefore, for example, the frame structure for higher SCSs in the sub-terahertz band is required to be specified. The above-described frame structure includes, for example, frames, subframes, slots, OFDM symbols, the data length, the CP length, numerologies, etc. In addition, how to design numerologies for different scenarios such as NTN, sub-terahertz band, etc., needs to be specified.

### Operation 1) The numerology design will be described below.

In the frequency band for sub-terahertz or the frequency band beyond 71 GHz, the larger bandwidth is expected to require the larger FFT size. As a result, the transmitter complexity increases, and thus, the larger SCS is expected to be required in order to reduce the complexity. In addition, the phase noise is expected to be increased in the high frequency band. The larger SCSs have robustness with respect to the phase noise.

Operation 1-1) The value range of numerologies may be enhanced by using the frame and slot structure in NR. Table 2 illustrates an example of enhanced numerologies.

**[Table 2]**

| Numerology *µ* | 0 | 1 | 2 | 3 | 4 | 5 | 6 | 7 |
|---|---|---|---|---|---|---|---|---|
| SCS | 15 kHz | 30 kHz | 60 kHz | 120 kHz | 240 kHz | 480 kHz | 960 kHz | 1920 kHz |
| Slot-length | 1 ms | 0.5 ms | 0.25 ms | 0.125 ms | 0.0625 ms | 0.0313 ms | 0.0156 ms | 7.8 *µ* s |
| Numerology *µ* | 8 | 9 | 10 | 11 | 12 | 13 | 14 | ... |
| SCS | 3840 kHz | 7680 kHz | 15360 kHz (1.5 MHz) | 30720 kHz (3 MHz) | 61440 kHz (6.1 MHz) | 122880 kHz (12.3 MHz) | 245760 kHz (24.6 MHz) | ... |
| Slot-length | 3.9 *µ* s | 2 *µ* s | 1 *µ* s | 0.5 *µ* s | 0.25 *µ* s | 0.125 *µ* s | 0.062 *µ* s | ... |

In a high frequency band such as sub-terahertz, the range of numerologies and supported SCSs may be increased. The constant parameter is a subframe of 1 ms. The scaling parameters are a slot length of 2^{-µ} ms and an SCS of 15 * 2^{µ} kHz. For a given bandwidth, the number of subcarriers may be scaled depending on numerologies. When the number of subcarriers is decreased to be 1, the transmission will be a single-carrier transmission.

With respect to the bandwidth of 10 GHz in sub-terahertz, the number of subcarriers corresponding to the numerologies 7 to 19 will be 5,208, 2,604, 1,302, 651, 326, 163, 82, 41, 20, 10, 5, 2, and 1. With respect to the bandwidth of 1 GHz in sub-terahertz, the number of subcarriers corresponding to the numerologies 4 to 16 will be 4,166, 2,083, 1,042, 521, 260, 130, 65, 32, 16, 8, 4, 2 and 1.

It is to be noted that the numerology is not required to be increased continuously. Partial numerologies may be supported. For example, in the sub-terahertz band, numerologies 7 to 9 and numerologies 13 to 16 may be supported, and numerologies 10 to 12 are not required to be supported.

Operation 1-2) The time unit may be defined to be a smaller value in order to support a larger channel bandwidth. For example, as illustrated in Table 3, a new time unit may be scaled based on the time unit in NR.

**[Table 3]**

| | **LTE** | **NR** |
|---|---|---|
| Time unit definition | • *Tₛ =* 1/(Δ*f_{ref} · N_{f,ref}*) = 32.552 *ns* | • *T_{c}* = 1/(Δ*fₘₐₓ · N_{f}*) = 0.509 ns |
| | • Δ*f_{ref} =* 15 *kHz, N_{f,ref} =* 2048 | • Δ*ƒₘₐₓ* = 480 *kHz, N_{f}* = 4096 |
| | | • Constant: *κ = Tₛ*/*T_{c}* = 64 |
| Maximum channel bandwidth | • 20 MHz | • 100 MHz |
| | | • 400 MHz via CA |
| Sampling bandwidth | *•* Δ*f_{ref} · N_{f,ref}* = 30.7 MHz | *•* Δ*fₘₐₓ · N_{f}* = 1.97 GHz |

| | **6G (One example)** | |
|---|---|---|
| Time unit definition | • *T*_{*c*6} = 1/(Δ*f*_{*max*6} *· N*_{*f*6}) = 0.064 ns | |
| | • *Δf*_{*max*6} = 7680 *kHz, N*_{*f*6} *=* 2048 | |
| | • Constant: *κ*' = *T_{c}*/*T*_{*c*6} = 8 | |
| Maximum channel bandwidth | • Example: 500 MHz, or 1 GHz, or 10 GHz | |
| Sampling bandwidth | • Δ*f*_{*max*6} *· N*_{*f*6} = 15.7 GHz | |

The time unit is an important parameter for designing the frame structure. Table 3 illustrates an example of time units for LTE, NR, and 6G. The time unit for LTE is denoted as Tₛ and the time unit for NR is denoted as T_{c}. The sampling bandwidth required for supported channel bandwidth is affected by the definition of the time unit as illustrated in Table 3.

In 6G, the GHz-level of channel bandwidth for sub-terahertz is expected to be supported. For example, in a case where the channel bandwidth is 10 GHz, the SCS Δfₘₐₓ₆ may be equal to 7,680 kHz and the FFT size N_{f6} may be equal to 2,048 as illustrated in Table 3. The time unit T_{c6} is equal to 1/(Δfₘₐₓ₆ * N_{f6}) = 0.064 ns, and is equal to one eighth of the time unit 0.509 ns for NR. In this example, the constant κ' = T_{c}/T_{c6} = 8. It is to be noted that the sampling bandwidth is equal to Δfₘₐₓ₆ * N_{f6} = 15.7 GHz as illustrated in Table 3.

It is to be noted that a different value may be enabled to be configured as the constant κ'. For example, κ' = 1 is for a case in which the time unit for NR is reused. It is to be noted that Δfₘₐₓ₆ and N_{f6} are not required to indicate the maximum SCS and FFT size supported by 6G, and a larger SCS and FFT size may be defined.

Operation 1-3) The supported numerology set may be enhanced for a certain use case scenario, a certain frequency, and/or a certain channel or a certain reference signal.

With respect to the channel characteristics in the satellite communication system (refer to Non-Patent Literature 7), the delay spread is smaller than that of TN and the coherence bandwidth is larger than that of TN. A set of different numerology values may be supported for a different use case scenario such as the scenario for a certain carrier frequency band such as FR3, for example.

Currently, the numerologies 0, 1, and 2 are used for FR1, the numerologies 2, 3, and 4 are used for FR2-1, the numerology 4 is used solely for SSB, and the numerologies 3, 5, and 6 are used for FR2-2. In addition, the same numerology set as that for TN is used for NTN.

On the other hand, the channel characteristics are expected to be different between NTN and TN even in a case where NTN and TN use the same frequency band. Therefore, different numerology sets may be supported between NTN and TN. For example, in NTN, a numerology larger than that for TN may be supported. As an example, in FR3, numerologies 1 to 3 are supported for TN. Here, in NTN for FR3, numerologies 2 to 4 may be supported for data transmission. The enhanced numerology and SCS may be applied to PDSCH, PUSCH, SSB, PDCCH, and/or PUCCH.

According to the above-described operation 1), the numerology that is adapted to sub-terahertz, NTN, or the like can be specified.

### Operation 2) The CP design will be described below.

Operation 2-1) Definitions of OFDM symbol and CP for NR may be scaled depending on numerologies. Table 4 illustrates an example of scaling based on the numerologies.

**[Table 4]**

| Numerology *µ* | 0 | 1 | 2 | 3 | 4 | 5 | 6 |
|---|---|---|---|---|---|---|---|
| SCS | 15 kHz | 30 kHz | 60 kHz | 120 kHz | 240 kHz | 480 kHz | 960 kHz |
| Data per OFDM symbol 2048 *κ ·* 2⁻*^{µ} · T_{c}* | 66.67 *µ* s | 33.33 *µ* s | 16.67 *µ* s | 8.33 *µ* s | *4.17 µ* s | 2.08 *µ* s | 1.04 *µ* s |
| CP-length | | | | | | | |
| (144 *κ* · 2^{-*µ*} + 16 *κ*) *· T_{c}* for #0 and #7 · 2*^{µ}* symbol, 144 *κ ·* 2*^{-µ} · T_{c}* for residual symbols¹ | 4.688 *µ* s | 2.344 *µ* s | 1.172 *µ* s | 0.586 *µ* s | 0.293 *µ* s | 0.147 *µ* s | 0.073 *µ* s |
| | 5.208 *µ* s | 2.865 *µ* s | 1.693 *µ* s | 1.107 *µ* s | 0.814 *µ* s | 0.667 *µ* s | 0.594 *µ* s |
| Slot-length | 1 ms | 0.5 ms | 0.25 ms | 0.125 ms | 0.0625 ms | 0.0313 ms | 0.0156 ms |
| Numerology *µ* | 7 | 8 | 9 | 10 | 11 | 12 | ... |
| SCS | 1920 kHz | 3840 kHz | 7680 kHz | 15360 kHz | 30720 kHz | 61440 kHz | ... |
| Data per OFDM symbol 2048 *κ ·* 2^{-*µ*} · *T_{c}* | 0.52 *µ* s⁴ | 0.26 *µ* s⁴ | 0.13 *µ* s⁵ | **0.065** *µ* s⁵ | 0.033 *µ* s⁵ | 0.016 *µ* s⁵ | ... |
| CP-length | | | | | | | ... |
| (144 *κ* · 2^{-*µ*} + 16 *κ*) · *T_{c}* for #0 and #7 · 2*^{µ}* symbol, 144 *κ ·* 2*^{-µ} · T_{c}* for residual symbols¹ | 0.037 *µ* s | 0.018 *µ* s | 9.2 ns | 4.6 ns | 2.3 ns | 1.1 ns | |
| | 0.558 *µ* s⁴ | 0.539 *µ* s⁴ | 0.53 *µ* s⁵ | 0.525 *µ* s⁵ | 0.523 *µ* s⁵ | 0.522 *µ* s⁵ | |
| Slot-length | 7.8 *µ* s | *3.9 µ* s | *2 µ* s | 1 *µ* s | 0.5 *µ* s | 0.25 *µ* s | ... |
| Note 1: Time units *T_{c}* = 1/(Δ*fₘₐₓ · N_{f}*) *where* Δ*fₘₐₓ* = 480 *kHz, N_{f}* = 4096. *Constant κ = Tₛ*/*T_{c}* = 64, where *Tₛ =* 1/(Δ*f_{ref} · N_{f,ref}*)*,* Δ*f_{ref} =* 15 *kHz and N_{f,ref}* = 2048. | | | | | | | |
| Note 2: Numerology 0-2 for FR1, Numerology 2-4 for FR2-1 with 4 (240 kHz) only for SS/PBCH, Numerology 3-6 for FR2-2 | | | | | | | |
| Note 3: Numerology 7-12 potential for sub-T Hz | | | | | | | |
| Note 4: CP overhead for #0 and #7 · 2*^{µ}* symbol > 50% | | | | | | | |
| Note 5: CP overhead for #0 and #7 · 2*^{µ}*- symbol > 80% | | | | | | | |

As illustrated in Table 4, the data length per OFDM symbol may be 2,048κ * 2^{-µ} * T_{c}. With respect to the normal CP length, the longer CP length for OFDM symbol #0 and OFDM symbol #7 * 2^{µ} may be (144κ * 2^{-µ} + 16κ) * T_{c}, and the CP length for other symbols may be 144κ * 2^{-µ} * T_{c}.

According to the above-described scaling, compatibility with NR can be improved and the services requiring low latency can be achieved.

In the current CP design, the CP difference between symbols is small for small SCSs. For example, with respect to the significantly large SCS, the current CP design creates a noticeable CP and OFDM difference between symbols.

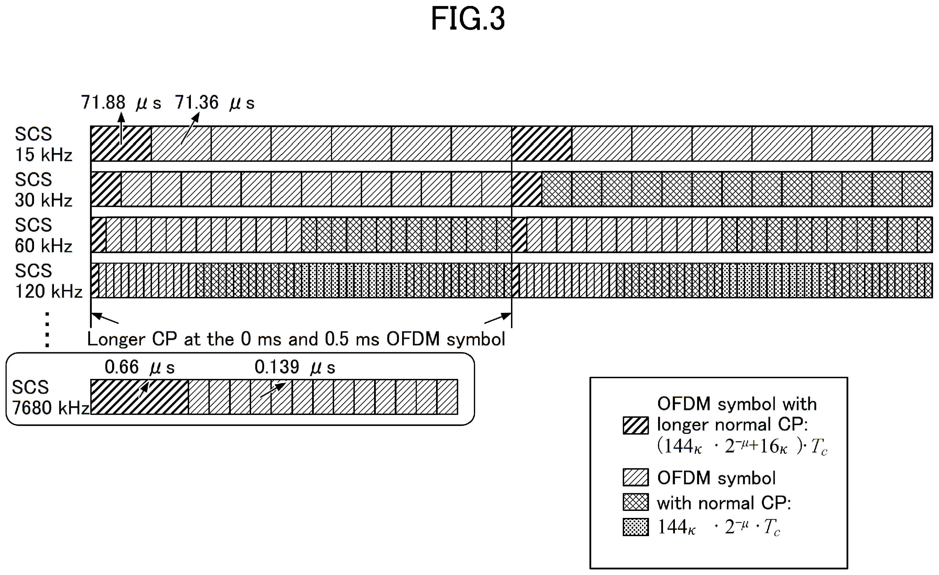

Fig. 3 is a drawing for describing an example (1) of the CP length in an embodiment of the present invention. The longer CP length for OFDM symbol #0 and OFDM symbol #7 * 2^{µ} is (144κ * 2^{-µ} + 16κ) * T_{c}, and the CP length for other symbols is 144κ * 2^{-µ} * T_{c}.

As illustrated in Fig. 3, with respect to smaller SCSs, OFDM symbol #0 is slightly longer than other symbols. For example, the length of OFDM symbol #0 is 71.88 µs and the length of OFDM symbol #1 is 71.36 µs for SCS 15 kHz.

On the other hand, as illustrated in Fig. 3, with respect to larger SCSs, OFDM symbol #0 is significantly longer than other symbols. For example, the length of OFDM symbol #0 is 0.66 µs and the length of OFDM symbol #1 is 0.139 µs for SCS 7,680 kHz.

The longer CP length for OFDM symbol #0 and OFDM symbol #7 * 2^{µ} may be used for implementing other functions in addition to a function of avoiding interference between symbols. For example, the CP length may be maintained without change and a new function may be introduced for the longer CP. For example, the longer CP length for OFDM symbol #0 and OFDM symbol #7 * 2^{µ} may be used as a guard symbol for various switching functions. For example, the above-described switching functions include switching of UL transmission beams, switching of DL reception beams, switching between DL and UL, switching between Rx and Tx, etc. Alternatively, when determining guard symbols for various switching functions, the number of symbols may be determined based on the symbol positions. For the interval between symbols before and after switching, one symbol may be required in the case of having a longer CP length, and, otherwise, a plurality of symbols may be required.

In addition, for example, the CP length and functions may be changed. For example, the longer CP length for OFDM symbol #0 and OFDM symbol #7 * 2^{µ} may be replaced by a different reference signal, a preamble, a known sequence for channel estimation, synchronization, and/or UE identification, etc.

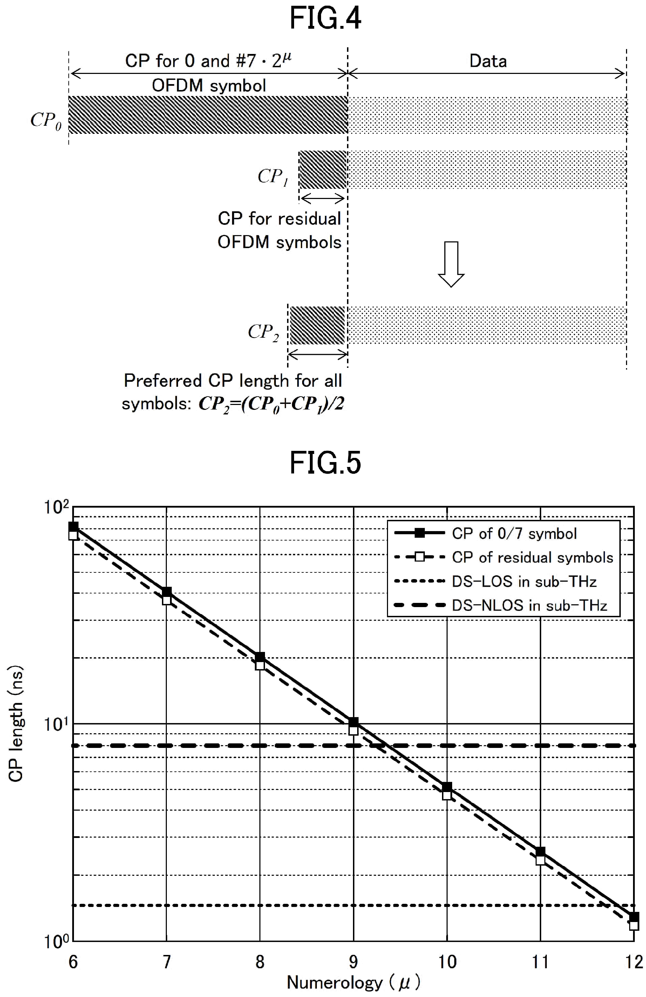

Fig. 4 is a drawing for describing an example (2) of the CP length in an embodiment of the present invention. As illustrated in Fig. 4, with the increase of SCS, the longer CP length for OFDM symbol #0 and OFDM symbol #7 * 2^{µ} becomes significantly long as compared with the CP length of other symbols and with the data. The unbalanced CP lengths may be a waste of CP resources from the viewpoint of allowing the delay spread. For example, the supported channel RMS delay spread may be restricted by the minimum CP length that is shorter than the average CP length. Fig. 4 illustrates an example in which a CP length is applied for all symbols, the CP length being obtained by calculating CP₂ = (CP₀ + CP₁)/2 where CP0 is the longer CP length for OFDM symbol #0 and OFDM symbol #7 * 2^{µ} and CP1 is the CP length of other symbols. It is to be noted that the calculation may be CP₂ = (2 * CP₀ + 12 * CP₁)/14.

Operation 2-2) A uniform CP length may be applied for all symbols. The uniform CP length may mean the same CP overhead (for example, 7.3%) for each symbol as that for NR. Table 5 illustrates an example of time units for OFDM symbols.

**[Table 5]**

| | **LTE** | **NR** |
|---|---|---|
| Time unit definition | • *Tₛ* = 1/(Δ*f_{ref}* · *N_{f,ref}*) | • *T_{c}* = 1/(Δ*fₘₐₓ · N_{f}*) |
| | • Δ*f_{ref}* = 15 *kHz, N_{f,ref}* = 2048 | • Δ*fₘₐₓ* = 480 *kHz, N_{f}* = 4096 |
| | | • Constant: *K = Tₛ*/*T_{c}* = 64 |
| Data length per OFDM symbol | • 2048 samples: 66.67 *µ* s for 15 kHz SCS | • 2048*κ* · 2*^{-µ} · T_{c}* |
| CP length per OFDM symbol | • 160 samples for 0/7-th OFDM symbol: 5.2 *µ* s | • (144*κ ·* 2*^{-µ} +* 16 *κ*) *· T_{c}* |
| | | • 144 *κ* · 2⁻*^{µ} · T_{c}* |
| | • 144 samples for residual OFDM symbols: 4.7 *µ* s | |

| | **6G** | |
|---|---|---|
| Time unit definition | • *T*_{*c*6} = 1/(Δ*f*_{*max*6} *· N*_{*f*6}) | |
| | • Δ*f*_{*max*6} = 7680 *kHz, N*_{*f*6} = 2048 | |
| | • Constant: *κ'* = *T_{c}*/*T*_{*c*6} = 8 (Example) | |
| Data length per OFDM symbol | • 2048 *· κ · κ' ·* 2*^{-µ} · T*_{*c*6} (Note 1) | |
| CP length per OFDM symbol | • See details in the following specification | |
| Note 1: 2048 · *κ* · *κ' ·* 2⁻*^{µ} · T*_{*c*6} = 2048 · *κ ·* 2⁻*^{µ} · T_{c}* = 2048 · 2⁻*^{µ} · Tₛ,* i.e., the definition of OFDM symbol for data is same for LTE, NR and 6G in this table. | | |

As illustrated in Table 5, in LTE and NR, the CP lengths are different between symbols. On the other hand, in 6G, the CP lengths may be balanced between symbols as described below.

In order to solve a problem of the unbalanced CP lengths between different symbols, the CP length per OFDM symbol may be redesigned by using similar lengths. In order to support larger bandwidths and higher SCSs, the time unit may be redefined. For example, the data length per OFDM symbol may be equal to 2,048 * κ * κ' * 2^{-µ} * T_{c6}. It is to be noted that 2,048 is an FFT size. It is to be noted that the above-described data length is similar to that for LTE and NR.

Operation 2-2-1) The CP length may be A * 2,048 * κ * κ' * 2^{-µ} * T_{c6} for predetermined fixed symbols in each subslot, slot, subframe, and/or frame, and the CP length may be B * 2,048 * κ * κ' * 2^{-µ} * T_{c6} for the remaining symbols. The ratio and/or the gap between A and B may be restricted to be in a certain range. For example, the CP lengths may become more balanced as the ratio between A and B becomes close to 1. For example, the gap between the CP length for predetermined fixed symbols and the CP length for the remaining symbols may be restricted to be in a certain range.

The number of samples per slot, (0.001 * 2^{-µ})/T_{c} = 1,966,080 * 2^{-µ}, cannot be divided equally for 14 symbols. In a case where "14 symbols per slot" is reused for the normal CP length, the CP lengths of 14 symbols cannot be the same. In addition, the CP length per symbol is constrained by 2ⁿ data samples per symbol due to the FFT size limitation.

The data length per OFDM symbol is equal to 2,048 * κ * κ' * 2^{-µ} * T_{c6} where κ=64 is a scaling factor for the time unit in NR and LTE and κ' is a scaling factor for the time unit in NR and 6G, and κ' may be equal to 8, for example.

Scaling based on the numerology may be performed for all symbols. The longer CP may be applied for OFDM symbol #0 and OFDM symbol #7 in each slot.

Table 6 illustrates an example (1) of a balanced CP length. Table 6 is an example in which the CP length for OFDM symbol #0 and OFDM symbol #7 is equal to 160 * κ * κ' * 2^{-µ} * T_{c6} and the CP length for the remaining 12 symbols is equal to 144 * κ * κ' * 2^{-µ} * T_{c6}.

**[Table 6]**

| Numerology *µ* | 0 | 1 | 2 | 3 | 4 | 5 | 6 |
|---|---|---|---|---|---|---|---|
| SCS | 15 kHz | 30 kHz | 60k Hz | 120 kHz | 240 kHz | 480 kHz | 960 kHz |
| Data per OFDM symbol 2048 *· K · κ'* · 2⁻*^{µ} · T*_{*c*6} | 66.67 *µ* s | 33.33 *µ* s | *16.67 µ* s | 8.33 *µ* s | *4.17 µ* s | 2.08 *µ* s | 1.04 *µ* s |
| CP-length | | | | | | | |
| 160 · *κ · κ'* · 2*^{-µ} · T*_{*c*6} for #0 and #7 symbol, 144 · *κ* · *κ'* · 2^{-*µ*} · *T*_{*c*6} for residual symbols¹ | 4.688 *µ* s | 2.344 *µ* s | 1.172 *µ* s | 0.586 *µ* s | 0.293 *µ* s | 0.147 *µ* s | 0.073 *µ* s |
| | 5.208 *µ* s | 2.604 *µ* s | 1.302 *µ* s | 0.651 *µ* s | 0.326 *µ* s | 0.163 *µ* s | 0.081 *µ* s |
| Slot-length | 1 ms | 0.5 ms | 0.25 ms | 0.125 ms | 0.0625 ms | 0.0313 ms | 0.0156 ms |
| Numerology *µ* | 7 | 8 | 9 | 10 | 11 | 12 | ... |
| SCS | 1920 kHz | 3840 kHz | 7680 kHz | 15360 kHz | 30720 kHz | 61440 kHz | ... |
| Data per OFDM symbol 2048 · *κ* · *κ'* · 2^{-*µ*} ·*T*_{*c*6} | 0.52 *µ* s | 0.26 *µ* s | 0.13 *µ* s | 0.065 *µ* s | 0.033 *µ* s | 0.016 *µ* s | ... |
| CP-length | | | | | | | ... |
| 160 *· κ · κ'* · 2⁻*^{µ} · T*_{*c*6} for #0 and #7 symbol, 144 · *κ · κ' ·* 2^{-*µ*} · *T*_{*c*6} for residual symbols¹ | 0.037 *µ* s | 0.018 *µ* s | 9.2 ns | 4.6 ns | 2.3 ns | 1.1 ns | |
| | *0.041 µ* s | 0.02 *µ* s | 0.01 *µ* s | 5.1 ns | 2.5 ns | 1.3 ns | |
| Slot-length | 7.8 *µ* s | 3.9 *µ* s | *2 µ* s | 1 *µ* s | 0.5 *µ* s | 0.25 *µ* s | ... |
| Note 1: Time units *T*_{*c*6} *=* 1/(Δ*fₘₐₓ · N_{f}*) *where* Δ*fₘₐₓ* = 7680 *kHz, N_{f}* = 2048. *Constant κ' = Tₛ*/*T_{c}* = 8, where *Tₛ =* 1/(Δ*f_{ref} · N_{f,ref}*) *,* Δ*f_{ref}* = 480 *kHz and N_{f,ref}* = 4096 *for* 5*G NR.* | | | | | | | |
| Note 2: Numerology 0-2 for FR1, Numerology 2-4 for FR2-1 with 4 (240 kHz) only for SS/PBCH, Numerology 3-6 for FR2-2 Note 3: Numerology 7-12 potential for sub-T Hz; Numerology 9 is more promising. | | | | | | | |

As illustrated in Table 6, the CP length difference between symbols can be made smaller than that for NR even in a case of larger SCS.

Fig. 5 is a drawing for describing an example (1) of the CP length and delay spread in an embodiment of the present invention. Fig. 5 illustrates the CP length and delay spread illustrated in Table 6. As illustrated in Fig. 5, it is to be noted that the LOS delay spread in sub-terahertz is smaller than the CP length until the numerology is equal to 11. In addition, it is to be noted that the NLOS delay spread in sub-terahertz is smaller than the CP length for the numerology being 9.

In addition, for example, the CP length for OFDM symbol #0 and OFDM symbol #7 may be equal to 148 * κ * κ' * 2^{-µ} * T_{c6} and the CP length for the remaining 12 symbols may be equal to 146 * κ * κ' * 2^{-µ} * T_{c6}. The CP lengths can be balanced between symbols.

Table 7 illustrates an example (1) of a balanced CP length. Table 7 is an example in which the CP length for OFDM symbol #0 is equal to 176 * κ * κ' * 2^{-µ} * T_{c6} and the CP length for the remaining 13 symbols is equal to 144 * κ * κ' * 2^{-µ} * T_{c6}.

**[Table 7]**

| Numerology *µ* | 0 | 1 | 2 | 3 | 4 | 5 | 6 |
|---|---|---|---|---|---|---|---|
| SCS | 15 kHz | 30 kHz | 60 kHz | 120 kHz | 240 kHz | 480 kHz | 960 kHz |
| Data per OFDM symbol 2048 *· κ · κ' ·* 2⁻*^{µ} · T*_{*c*6} | 66.67 *µ* s | 33.33 *µ* s | 16.67 *µ* s | 8.33 *µ* s | 4.17 *µ* s | 2.08 *µ* s | 1.04 *µ* s |
| CP-length | | | | | | | |
| 176 · *κ · κ'* · 2⁻*^{µ} · T*_{*c*6} for #0 symbol, 144 · *κ* - *κ'* · 2^{-*µ*} · *T*_{*c*6} for residual symbols¹ | 4.688 *µ* s | 2.344 *µ* s | 1.172 *µ* s | 0.586 *µ* s | 0.293 *µ* s | 0.147 *µ* s | 0.073 *µ* s |
| | 5.729 *µ* s | 2.865 *µ* s | 1.432 *µ* s | 0.716 *µ* s | 0.358 *µ* s | 0.179 *µ* s | 0.089 *µ* s |
| Slot-length | 1 ms | 0.5 ms | 0.25 ms | 0.125 ms | 0.0625 ms | 0.0313 ms | 0.0156 ms |
| Numerology *µ* | 7 | 8 | 9 | 10 | 11 | 12 | ... |
| SCS | 1920 kHz | 3840 kHz | 7680 kHz | 15360 kHz | 30720 kHz | 61440 kHz | ... |
| Data per OFDM symbol 2048 · *K · κ' ·* 2⁻*^{µ} · T*_{*c*6} | 0.52 *µ* s | 0.26 *µ* s | 0.13 *µ* s | 0.065 *µ* s | 0.033 *µ* s | 0.016 *µ* s | ... |
| CP-length | | | | | | | ... |
| 176 · *κ* · *κ'* · 2⁻*^{µ} · T*_{*c*6} for #0 symbol, 144 · *κ* · *κ'* · 2^{-*µ*} - *T*_{*c*6} for residual symbols¹ | 0.037 *µ* s | 0.018 *µ* s | 9.2 ns | 4.6 ns | 2.3 ns | 1.1 ns | |
| | 0.045 *µ* s | 0.022 *µ* s | 0.011 *µ* s | 5.6 ns | 2.8 ns | 1.4 ns | |
| Slot-length | 7.8 *µ* s | 3.9 *µ* s | *2 µ* s | 1 *µ* s | 0.5 *µ* s | 0.25 *µ* s | ... |
| Note 1: Time units *T*_{*c*6} = 1/(Δ*fₘₐₓ* · *N_{f}*) *where* Δ*fₘₐₓ =* 7680 *kHz, N_{f}* = 2048. *Constant κ' = Tₛ*/*T_{c}* = 8, where *Tₛ =* 1/(Δ*f_{ref}* · *N_{f,ref}*)*,* Δ*f_{ref}* = 480 *kHz and N_{f,ref}* = 4096 *for* 5*G NR.* | | | | | | | |
| Note 2: Numerology 0-2 for FR1, Numerology 2-4 for FR2-1 with 4 (240 kHz) only for SS/PBCH, Numerology 3-6 for FR2-2 Note 3: Numerology 7-12 potential for sub-T Hz; Numerology 9 is more promising. | | | | | | | |

As illustrated in Table 7, the CP length difference between symbols can be made smaller than that for NR even in a case of larger SCS.

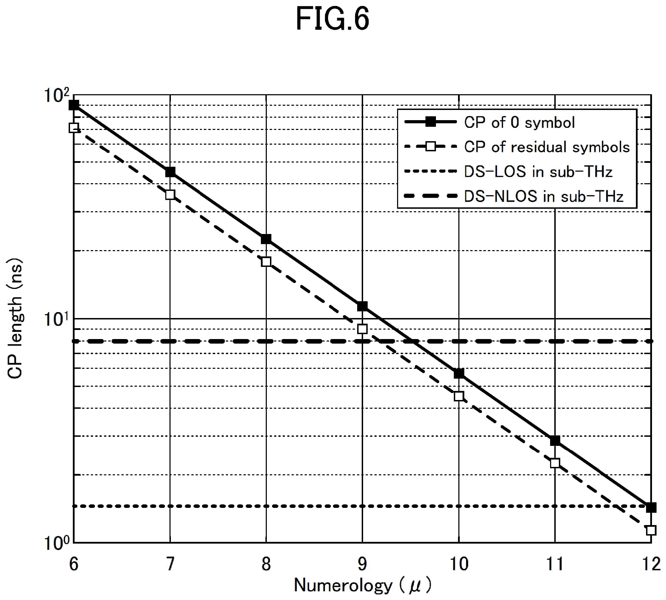

Fig. 6 is a drawing for describing an example (2) of the CP length and delay spread in an embodiment of the present invention. Fig. 6 illustrates the CP length and delay spread illustrated in Table 7. As illustrated in Fig. 6, it is to be noted that the LOS delay spread in sub-terahertz is smaller than the CP length until the numerology is equal to 11. In addition, it is to be noted that the NLOS delay spread in sub-terahertz is smaller than the CP length for the numerology being 9.

In addition, for example, the CP length for OFDM symbol #0 may be equal to 150 * κ * κ' * 2^{-µ} * T_{c6} and the CP length for the remaining 13 symbols may be equal to 146 * κ * κ' * 2^{-µ} * T_{c6}. The CP lengths can be balanced between symbols.

Operation 2-2-2) In a case where the CP length for several OFDM symbols in each slot is different from that for the remaining OFDM symbols, the complexity of a transceiver that performs CP addition and deletion especially when the slot length is short is expected to be increased. Accordingly, the CP length may be B * κ * κ' * 2^{-µ} * T_{c6} + X * κ * κ' * T_{c6} for predetermined fixed symbols in each subslot, slot, subframe, and/or frame, and the CP length may be B * κ * κ' * 2^{-µ} * T_{c6} for the remaining symbols. The ratio and/or the gap between X and B * 2^{-µ} may be restricted to be in a certain range.

For example, in addition to the longer CP at locations of 0 ms and/or 0.5 ms, the longer CP may be added at locations of 0.25 ms, 0.75 ms, 0.125 ms, 0.375 ms, 0.625 ms, and/or 0.875 ms. The tradeoff between the CP length balance and the number of OFDM symbols with longer CP can be controlled.

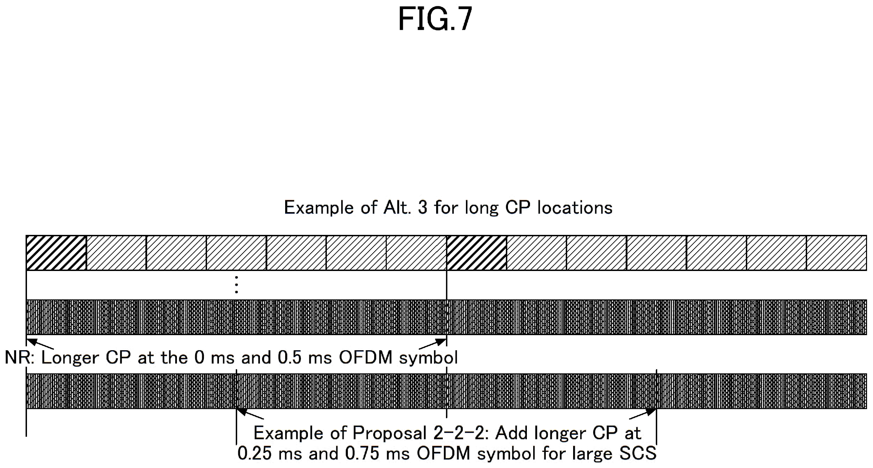

Fig. 7 is a drawing for describing an example of CP locations in an embodiment of the present invention. As illustrated in Fig. 7, in addition to the longer CP at locations of 0 ms and 0.5 ms, the longer CP may be added at locations of 0.25 ms and 0.75 ms.

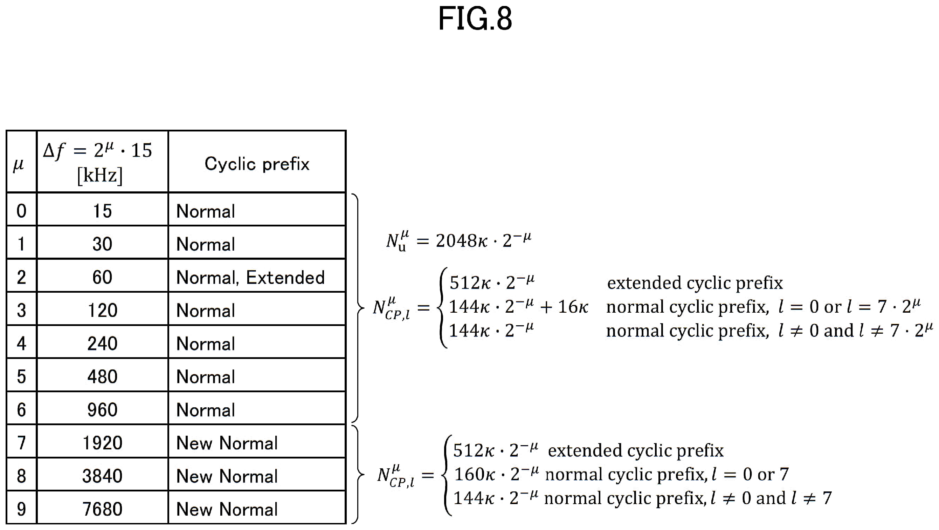

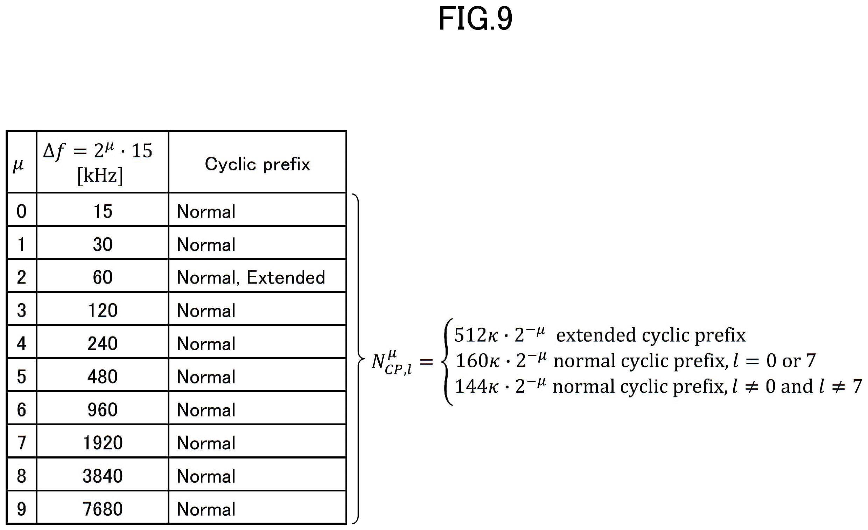

Operation 2-3) CP may be configured as described in the following 1) to 3).
1) The CP design for NR may be reused for the conventional numerologies 0 to 6. The CPs described in operation 2-1) or operation 2-2) may be used only for new numerologies. For example, operation 2-1) and operation 2-2) may be applied only for numerologies 7 to 9. Fig. 8 is a drawing for describing a configuration example (1) of the CP length in an embodiment of the present invention. Fig. 8 illustrates an example in which the CP design for NR is reused for the numerologies 0 to 6 and the CP in operation 2-1 is used only for new numerologies. The CP design for NR may be reused for the conventional numerologies 0 to 6. The new CP described in operation 2-1) or operation 2-2) may be used only for new numerologies.
2) Operation 2-1) and/or operation 2-2) may be applied for all numerologies including the numerologies 0 to 6. In other words, the equation related to CP may be directly configured. Fig. 9 is a drawing for describing a configuration example (2) of the CP length in an embodiment of the present invention. Fig. 9 illustrates an example in which the CP in operation 2-1) is used for all numerologies.
3) The conventional normal CP and the new normal CP may be configurable according to the high layer signaling (for example, MAC-CE, RRC, SIB, or the like), according to the physical layer signaling (for example, DCI) for each BWP or serving cell to which a certain frequency range or a certain numerology is applied, and/or according to UCI for each UE, for each UE group, and/or each UE type to which a certain frequency range or a certain numerology is applied.

According to the above-described operation 2), the CP length that is adapted to sub-terahertz, NTN, or the like can be specified.

Operation 3) Non-scaling CP design with flexible overhead may be used. The CP overhead of 7.1% may be changeable to more diverse values in order to handle diverse use cases and scenarios for 6G.

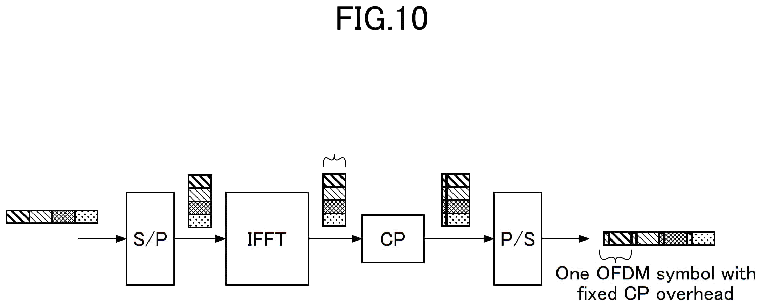

Fig. 10 is a drawing for describing an example (1) of CP addition in an embodiment of the present invention. Fig. 10 is an example of the conventional CP addition in which fixed CP overhead is added to one OFDM symbol.

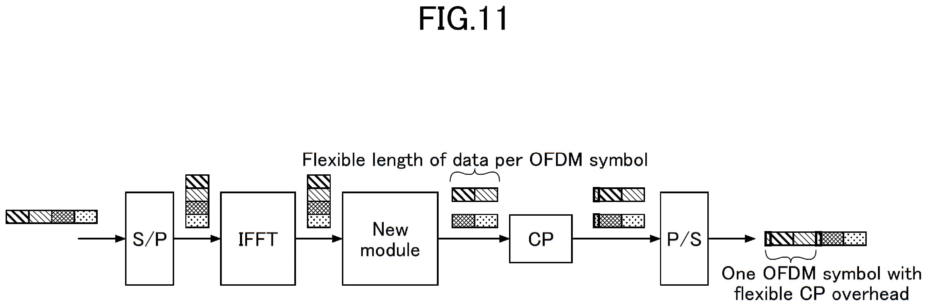

Fig. 11 is a drawing for describing an example (2) of CP addition in an embodiment of the present invention. As illustrated in Fig. 11, flexible CP overhead may be added to one OFDM symbol. According to the function of a new module illustrated in Fig. 11, a new format with a flexible length can be generated by using re-organization, repetition, spreading, or the like after applying IFFT to the data.

The following option 1) to option 4) may be performed as a non-scaling CP design with flexible overhead. It is to be noted that the parameters of the above-described operation 1) and the above-described operation 2) may be applied to operation 3) accordingly.

Option 1) The definition of the slot duration Tₛₗₒₜ and/or the frame may be changed. The slot duration 2^{-µ} may be changed to α * 2^{-µ}. The α is a positive parameter. The CP overhead can be flexibly changed.

Table 8 illustrates an example of option 1) in which Tₛₗₒₜ is equal to 0.94, 0.96, ..., 1.12. The number of symbols is 14.

**[Table 8]**

| *Tₛₗₒₜ* | *T_{sym}* | CP overhead |
|---|---|---|
| 28877 Tc | 2063 Tc | (2063 - 2048)/2048 = 0.71 % |
| 29491 Tc | 2106 Tc | (2106 - 2048)/2048 = 2.86 % |
| 30106 Tc | 2150 Tc | (2150 - 2048)/2048 = 5 % |
| 30720 Tc | 2194 Tc | (2194 - 2048)/2048 = 7.13 % |
| 31334 Tc | 2238 Tc | (2238 - 2048)/2048 = 9.29 % |
| 31949 Tc | 2282 Tc | (2282 - 2048)/2048 = 11.43 % |
| 32563 Tc | 2326 Tc | (2326 - 2048)/2048 = 13.57 % |
| 33178 Tc | 2370 Tc | (2370 - 2048)/2048 = 15.71 % |
| 33792 Tc | 2414 Tc | (2414 - 2048)/2048 = 17.86 % |
| 34406 Tc | 2458 Tc | (2458 - 2048)/2048 = 20 % |

As illustrated in Table 8, the CP overhead is between 0.71% and 20%.

Option 2) The number of OFDM symbols per slot N_{sym} may be changed. The design can be a simpler design. Tₛₗₒₜ is defined as defined in the above-described operation 1) and the above-described operation 2) for NR, and the CP overhead for different number of OFDM symbols per slot is as shown in Table 9.

**[Table 1]**

| *N_{sym}* | #Time units per OFDM symbol | CP overhead |
|---|---|---|
| 8 | 3840 Tc | (3840 - 2048)/2048 = 87.5 % |
| 9 | 3413 Tc | (3413 - 2048)/2048 = 66.7 % |
| 10 | 3072 Tc | (3072 - 2048)/2048 = 50 % |
| 11 | 2793 Tc | (2793 - 2048)/2048 = 36.4 % |
| 12 | 2560 Tc | (2560 - 2048)/2048 = 25 % → Extended CP in NR (25 %) |
| 13 | 2363 Tc | (2363 - 2048)/2048 = 15.4 % → Larger than 7.1 % in NR |
| 14 | 2194 Tc | (2194 - 2048)/2048 *=* 7.1 % → Normal CP in NR (7.1 %) |
| 15 | 2048 Tc | (2048 - 2048)/2048 *=* 0 % → No CP |

As illustrated in Table 9, when the number of OFDM symbols per slot N_{sym} is changed from 8 to 15, the CP overhead changes from 87.5% to 0%.

Option 3) Nₛₐₘₚₗₑ and/or T_{data} may be changed. *Tₛₗₒₜ* is defined as defined in the above-described operation 1) and the above-described operation 2) for NR, and the CP overhead for different number of OFDM symbols per slot is as shown in Table 10. It is to be noted that *Tₛₗₒₜ* = 30,720Tc, N_{sym} = 14, and T_{sym} = 2,194T_{c} in Table 10.

**[Table 10]**

| Data length 2*ⁿ*3*^{m}*5*^{l}* | CP overhead |
|---|---|
| 1728 (*n* = 6, *m* = 3, *l* = 0) | (2194 - 1728)/1728 = 26.97 % |
| 1800 (*n* = 3, *m* = 2, *l* = 2) | (2194 - 1800)/1800 = 21.89 % |
| 1875 (*n* = 0, *m* = 1, *l* = 4) | (2194 - 1875)/1875 = 17 % |
| 1920 (*n* = 7, *m* = 1, *l* = 1) | (2194 - 1920)/1920 = 14.27 % |
| 1944 (*n* = 3, *m* = 5, *l* = 0) | (2194 - 1944)/1944 = 12.86 % |
| 2000 (*n* = 4, *m* = 0, *l* = 3) | (2194 - 2000)/2000 = 9.7 % |
| 2025 (*n* = 0, *m* = 4, *l* = 2) | (2194 - 2025)/2025 = 8.35 % |
| 2048 (*n* = 11, *m* = 0, *l* = 0) | (2194 - 2048)/2048 = 7.13 % |
| 2160 (*n* = 4, *m* = 3, *l* = 1) | (2194 - 2160)/2160 = 1.57 % |
| 2187 (*n =* 0, *m =* 7*, l =* 0) | (2194 - 2187)/2187 = 0.32 % |

As illustrated in Table 10, when the data length is changed from 1,728 to 2,187, the CP overhead changes from 26.97% to 0.32%.

Option 3-1) The flexible CP overhead may be implemented for one or a plurality of data lengths by using a new module for generating the flexible data length for each OFDM symbol. For example, when the CP length is equal to 144 and the data length is equal to 4,096, the CP overhead can be equal to 3.4%. According to the above-described operation, the CP overhead can be configured more flexibly.

Option 3-2) The FFT size related to the OFDM symbol data length may be changed from 2ⁿ to 2ⁿ3^{m}5^{l} which is the DFT (Discrete Fourier transformation) size. According to the above-described operation, the CP overhead can be configured more flexibly. As illustrated in Fig. 10, the data length can be configured flexibly according to the combination of n, m, and l.

Option 4) In order to achieve flexible CP overhead, a part of or all of option 1), option 2), and option 3) may be combined.

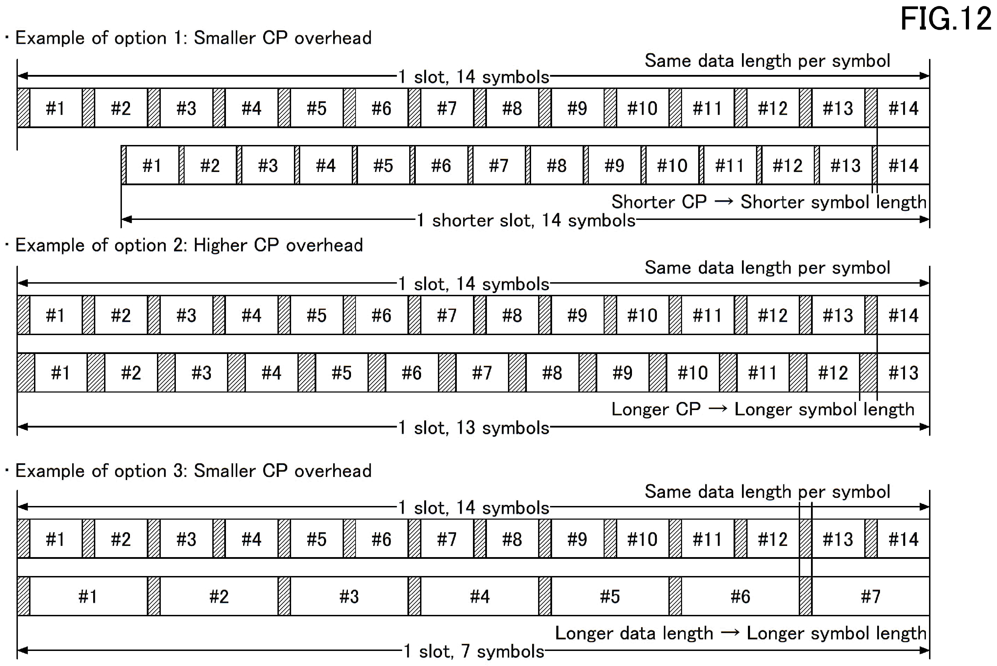

Fig. 12 is a drawing for describing an example (3) of CP addition in an embodiment of the present invention. Option 1 illustrated in Fig. 12 (Example of option 1) is an example of smaller CP overhead, and the short symbol length can be implemented by the short CP length. Option 2 illustrated in Fig. 12 (Example of option 2) is an example of larger CP overhead, and the long CP length and the long symbol length can be implemented by using a smaller number of symbols, 13. Option 3 illustrated in Fig. 12 (Example of option 3) is an example of smaller CP overhead, and the long data length, the long symbol length, and the small CP overhead can be implemented by using a smaller number of symbols, 7 with the same CP length.

Operation 3-1) The restrictions for the slot duration, the number of OFDM symbols, the data length per OFDM symbol, and/or the FFT size (that is, the above-described options 1 to 4) may be configurable in order to achieve flexible CP overhead for different requirements. The candidate values for restrictions for the slot duration, the number of OFDM symbols, the data length per OFDM symbol, and/or the FFT size may be defined in a manner in which configuration overhead and system complexity are to be decreased. According to the above-described operation, the CP overhead that is adapted to CP-OFDM, DFT-s-OFDM, and enhanced OFDM can be configured.

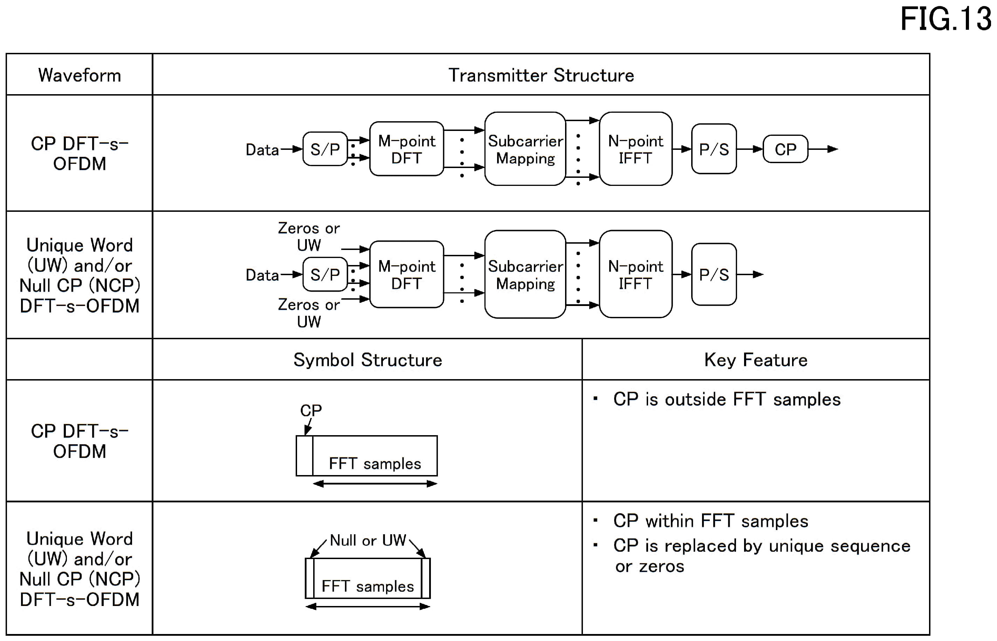

Fig. 13 is a drawing for describing an example (4) of CP addition in an embodiment of the present invention. The structure of a transmitter for applying CP for DFT-s-OFDM may be a structure illustrated in Fig. 13. According to the above-described structure, CP can be added independently from FFT samples.

Operation 3-2) In order to support flexible CP overhead, a new waveform based on DFT-s-OFDM including a unique word (UW) and/or a null CP (NCP) may be supported. According to the above-described operation, the flexible CP overhead can be supported without changing the frame structure and numerologies.

According to the above-described operation 3), the flexible CP length that is adapted to sub-terahertz, NTN, or the like can be specified.

Operation 4) Block-wise system design may be implemented. When SCS becomes larger in sub-terahertz, the OFDM symbol duration becomes significantly short, and thus, the delay decreases but the complexity of OFDM symbol synchronization and scheduling increases. Therefore, the block-wise frame structure and/or numerologies with block shaped time domain and frequency domain supporting the smaller FFT size may be used.

Hereinafter, the conventional OFDM symbol-based transmission method will be referred to as an OFDM symbol-wise transmission/system. The above-described block-wise transmission method will be referred to as a block-wise transmission/system.

Operation 4-1) The block-wise frame structure may be as described below.

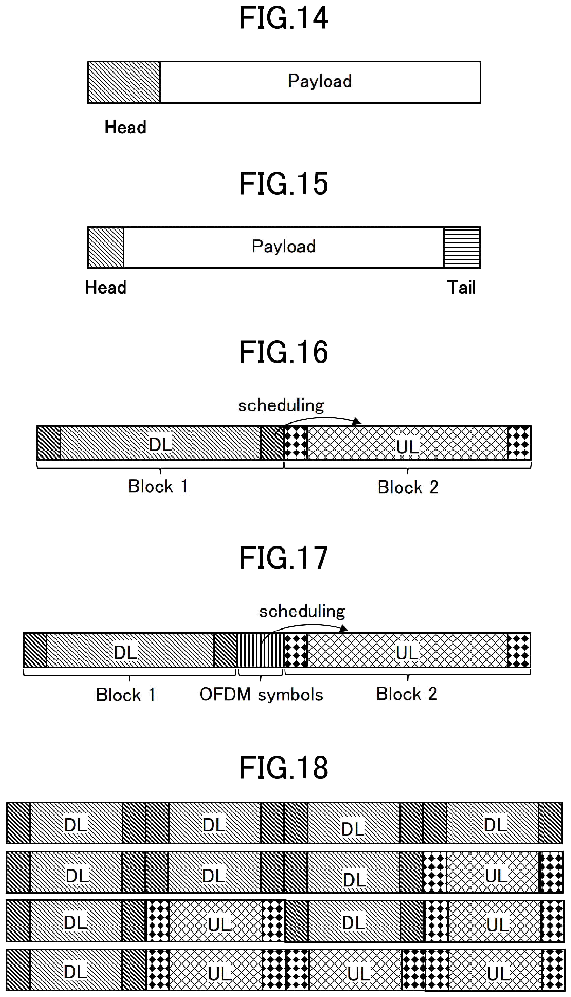

Option 1) Fig. 14 is a drawing for describing a block-wise example (1) in an embodiment of the present invention. As illustrated in Fig. 14, the block-wise frame structure may be a structure in which a header and a payload are included in one block. The header function may include a part of or all of: a preamble and/or a reference signal for synchronization; channel estimation; CP (or UW, NCP) for avoiding the inter-block interference; DCI including control information; and UCI including feedback information.

Option 2) Fig. 15 is a drawing for describing a block-wise example (2) in an embodiment of the present invention. As illustrated in Fig. 15, the block-wise frame structure may be a structure in which a header, a payload, and a tail are included in one block. The header function may include a part of or all of: a preamble and/or a reference signal for synchronization; channel estimation; CP (or UW, NCP) for avoiding the inter-block interference; DCI including control information; and UCI including feedback information.

The tail function may be the same as the header function, or may further include a guard interval and/or UCI including feedback information. When UCI is included in a tail, the UCI may include feedback information corresponding to the payload.

It is to be noted that the header and/or the tail may be divisible into a plurality of parts having different functions. It is to be noted that the definitions of a slot, an OFDM symbol, and a CP in the OFDM symbol-wise system may be not necessary for the block-wise system. However, the block edge and the boundary of an OFDM symbol, subslot, slot, and subframe may be aligned for the sake of interoperability.

The duplex method and the slot format for the block-wise system will be described. With respect to the duplex method, a part of or all of TDD, FDD, subband full duplex (SBFD), and FD (full duplex) may be supported. The selfinterference in FD in the frequency band can be decreased with reduced channel paths and the narrower bandwidth. According to the above-described operation, sub-terahertz can be adapted to FD.

The slot format may be a slot format as described below.

Option 1) Because of the long duration of one block, the joint scheduling of a plurality of blocks based on the slot format may be not necessary. Each block may be independently scheduled.

Option 1-1) Fig. 16 is a drawing for describing a block-wise example (3) in an embodiment of the present invention. As illustrated in Fig. 16, control information such as DCI or UCI and PDCCH or PUCCH may be included in the header and/or tail, and may determine the direction between UL or DL for the subsequent scheduling (subsequent X blocks, X is equal to or greater than 1). In an example illustrated in Fig. 16, the DCI included in the tail of DL block 1 includes scheduling information for the subsequent block 2 and also indicates that the direction thereof is UL.

Option 1-2) Fig. 17 is a drawing for describing a block-wise example (4) in an embodiment of the present invention. As illustrated in Fig. 17, control information such as DCI or UCI and PDCCH or PUCCH may be included in the OFDM symbol-wise transmission, and may determine the direction between UL or DL for the subsequent scheduling (subsequent X blocks, X is equal to or greater than 1).

Option 2) Fig. 18 is a drawing for describing a block-wise example (5) in an embodiment of the present invention. As illustrated in Fig. 18, the slot format of the block-wise transmission may be predefined, may be configured, or may be indicated. Fig. 18 illustrates an example of the slot format being DDDD, DDDU, DUDU, DUUU.

It is to be noted that the one block duration may be fixed in order to support the predefined slot format. It is to be noted that the duration in one slot, one subframe, and/or one frame may be significantly smaller than the number of OFDM symbols. According to the above-described operation, the number of slot formats can be decreased, which is adapted to the fixed block length system with low complexity.

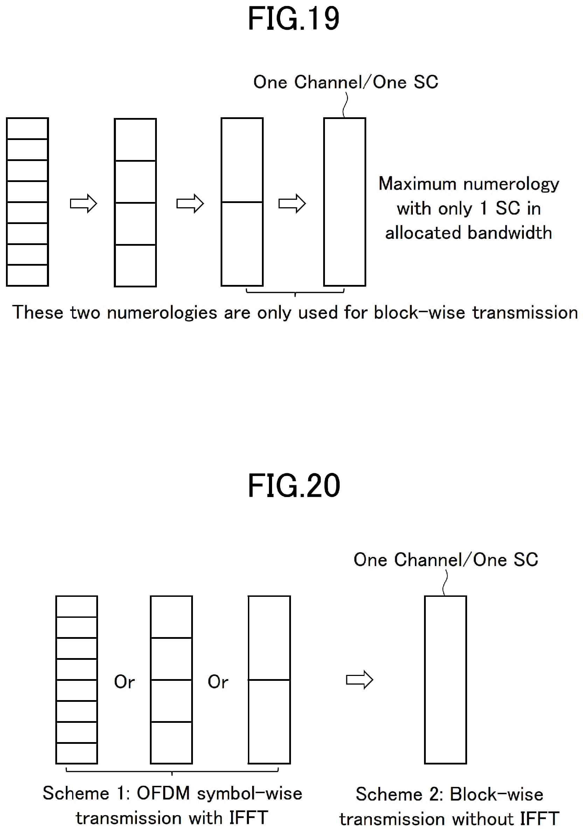

Operation 4-2) Numerologies and configuration method for the block-wise transmission will be described in the following 1) and 2). It is to be noted that the transmission scheduling with granularity of blocks instead of granularity of OFDM symbols may be defined as the block-wise transmission.
1) A plurality of SCSs or numerologies may be specified for the block-wise transmission. OFDM type waveforms and/or non-OFDM type waveforms (for example, OOK (On off keying), multi-carrier transmission based on a single carrier for each channel or for each subcarrier, etc.) may be used. Fig. 19 is a drawing for describing a block-wise example (6) in an embodiment of the present invention. As illustrated in Fig. 19, the block-wise transmission may be applied only for a specific numerology.

1-1) Configuration of the block-wise transmission and configuration of SCSs and/or numerologies may be explicitly or implicitly separately configured. For example, the numerology 15 may be applied for both the OFDM symbol-wise transmission and the block-wise transmission. Here, both configuration of the numerology 15 and configuration of the block-wise transmission may be required. The block-wise transmission may be explicitly or implicitly configured based on other parameters (for example, band, waveform type). For example, the block-wise transmission may be configured in a case where the band is configured to be sub-terahertz or B71 GHz. For example, the block-wise transmission may be configured in a case where non-OFDM type waveforms are configured.

1-2) Joint configuration regarding the block-wise transmission and the SCSs and/or numerologies may be enabled. For example, only the numerologies 15 to 17 and the corresponding SCSs may be applicable for the block-wise transmission. As a result, in a case where the numerology 15 is configured, the block-wise transmission may be configured.

It is to be noted that the block length may be scaled based on SCSs, may be not scaled, or may be a fixed length. It is to be noted that the OFDM type waveforms and the non-OFDM type waveforms may be enabled to be used for the block-wise transmission. In a case where the above-described two types of waveforms are supported, the waveform type may be explicitly or implicitly configured, may be configured by being combined with the configuration of the block-wise transmission, or may be configured by being separated from the configuration of the block-wise transmission.

2) SCSs and/or numerologies may be not defined for the block-wise transmission. An explicit or implicit indication for the channel bandwidth and/or carrier frequency and the block-wise transmission may be required. Non-OFDM type waveforms (for example, OOK, single-carrier) may be supported. Fig. 20 is a drawing for describing a block-wise example (7) in an embodiment of the present invention. As illustrated in Fig. 20, IFFT is not required to be used in a case where the block-wise transmission is configured.

The implicit indication of the block-wise transmission may be performed by being independent from the numerology and SCS and by being depending on the scenario and/or frequency band. In a case where the band is configured to be sub-terahertz or B71 GHz, the block-wise transmission may be used at least for PDSCH and/or PUSCH. An explicit indication for the transmission method may be an indication for indicating one of the OFDM symbol-wise transmission or the block-wise transmission.

The block-wise transmission and the related parameters (for example, waveform type, SCS, channel bandwidth, and/or carrier frequency, etc.) may be configured by the high layer signaling (RRC, MAC-CE, SIB), and/or by the physical layer signaling (DCI, UCI). The above-described configuration may be a semi-static configuration or may be a dynamic configuration. The above-described configuration may be configurable for a part of or all of PDSCH, PUSCH, SSB, PDCCH, PUCCH, etc.

Operation 4-3) The block-wise system and the OFDM symbol-wise system may coexist. Resources used by the block-wise transmission may be multiplexed with resources used by the OFDM symbol-wise transmission by using TDM, FDM, or TDM-and-FDM hybrid multiplexing method. It is to be noted that the block edge may be aligned with the boundaries of OFDM symbols, subslots, slots, and subframes for the sake of interoperability.

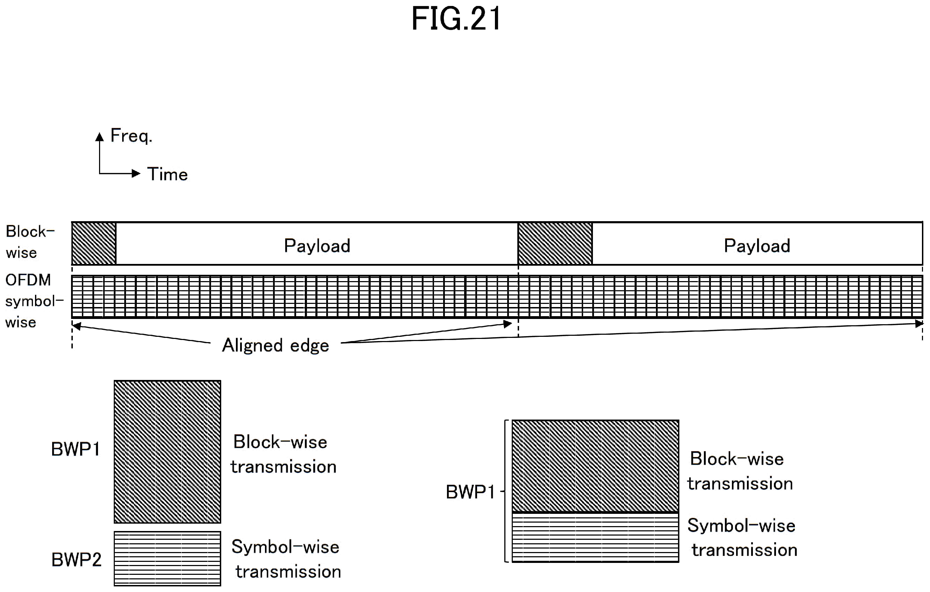

Option 1) Fig. 21 is a drawing for describing a block-wise example (8) in an embodiment of the present invention. As illustrated in Fig. 21, FDM may be applied for the block-wise transmission and the OFDM symbol-wise transmission. Different frequency resources may be allocated for the block-wise transmission and the OFDM symbol-wise transmission. As illustrated in Fig. 21, the above-described different frequency resources may be allocated to different BWPs (and/or serving cells), or may be allocated to one BWP (and/or serving cell). In a case where the numerology for the block-wise transmission is different from the numerology for the OFDM symbol-wise transmission within one BWP, a new UE capability indicating whether or not such operation is supported may be defined.

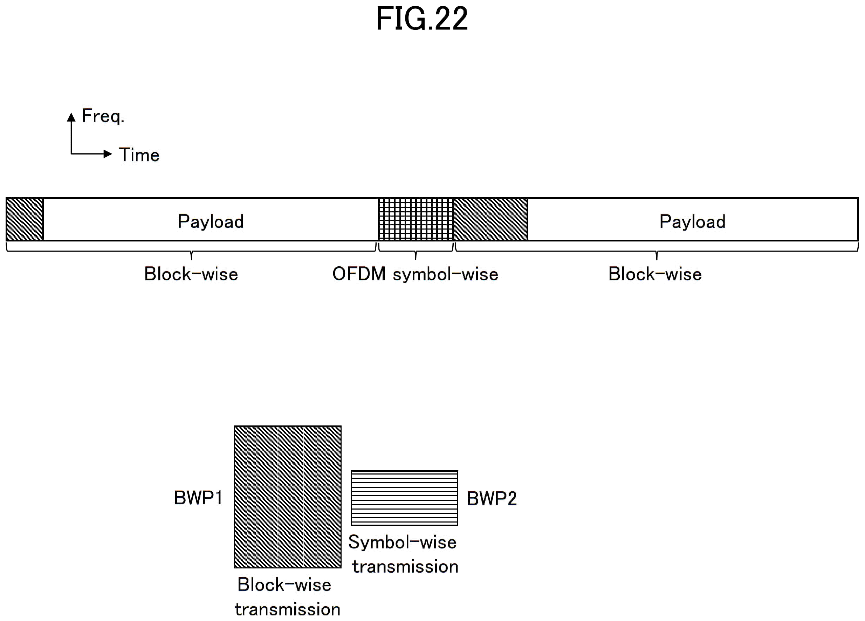

Option 2) Fig. 22 is a drawing for describing a block-wise example (9) in an embodiment of the present invention. As illustrated in Fig. 22, TDM may be applied for the block-wise transmission and the OFDM symbol-wise transmission. Different time resources may be allocated for the block-wise transmission and the OFDM symbol-wise transmission.

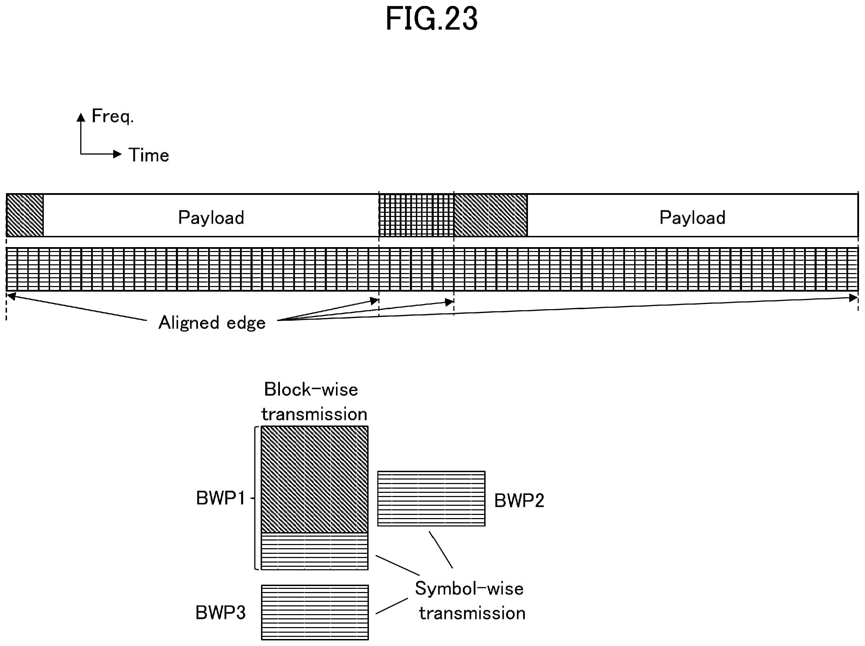

Option 3) Fig. 23 is a drawing for describing a block-wise example (10) in an embodiment of the present invention. As illustrated in Fig. 23, the TDM-and-FDM hybrid multiplexing method may be applied for the block-wise transmission and the OFDM symbol-wise transmission. As illustrated in Fig. 23, the above-described different frequency resources may be allocated to different BWPs (and/or serving cells), or may be allocated to one BWP (and/or serving cell). In a case where the numerology for the block-wise transmission is different from the numerology for the OFDM symbol-wise transmission within one BWP, a new UE capability indicating whether or not such operation is supported may be defined.

According to the above-described operation 4), the transmission and reception method adapted to sub-terahertz and NTN can be specified.

The UE capabilities described below may be defined.
- Whether or not SCS beyond 960 kHz is supported.
- Whether or not CP with new contents is supported for OFDM symbol #0 and/or OFDM symbol #7 * 2^{-µ}. The new contents are, for example, an existing sequence, preamble, reference signal, or the like.
- Whether or not a new CP length is supported for OFDM symbol #0 and/or OFDM symbol #7 for each slot.
- Whether or not a number of OFDM symbols other than 12 and 14 is supported.
- Whether or not the DFT size of 2ⁿ3^{m}5^{l} for OFDM symbols is supported. The corresponding waveform types may be CP-OFDM, DFT-s-OFDM, and/or enhanced CP-OFDM or DFT-s-OFDM.
- Whether or not the slot duration other than 2^{-µ} ms is supported.
- Whether or not a new time unit is supported.
- Whether or not waveforms with flexible CP length (for example, NCP, UW based DFT-s-OFDM) are supported.
- Whether or not the block-wise transmission, the block-wise frame structure, numerologies, and coexistence between the block-wise transmission and the OFDM symbol-wise transmission are supported.
- Whether or not the simultaneous processing of channels and/or signals with different numerologies is supported.

According to the above-described embodiments, the base station 10 and the terminal 20 can apply the radio frame structure adapted to the next generation wireless communication systems such as sub-terahertz, NTN to communications.

In other words, the radio frame structure adapted to the environments related to delay can be used in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

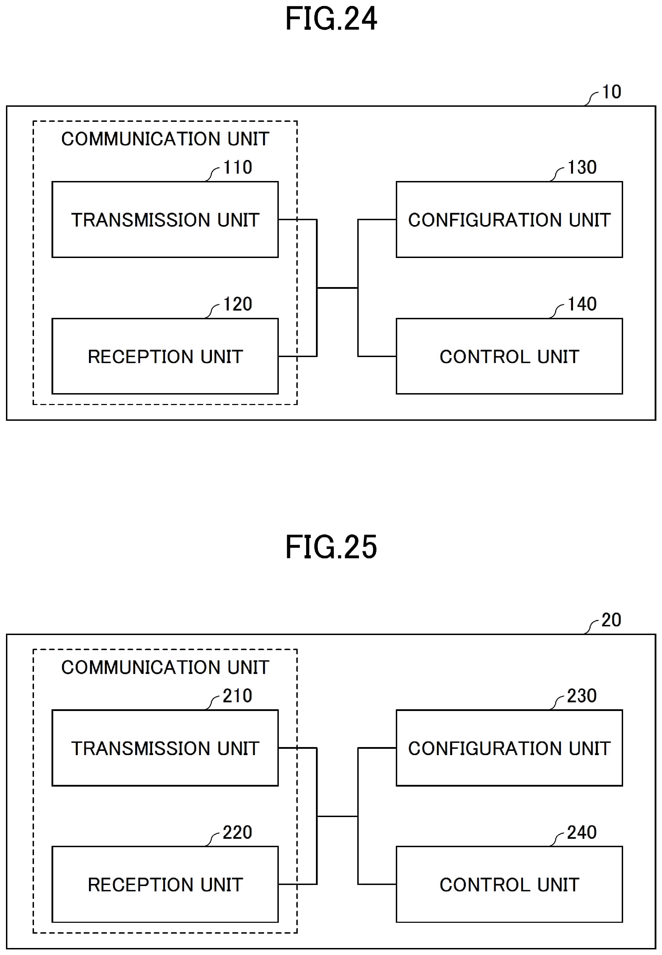

Fig. 24 is a drawing illustrating an example of a functional structure of a base station 10 according to an embodiment of the present invention. As shown in Fig. 24, the base station 10 includes a transmission unit 110, a reception unit 120, a configuration unit 130, and a control unit 140. The functional configuration illustrated in Fig. 24 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the frame structure configuration.

The control unit 140 performs control related to the frame structure configuration as described in the embodiments. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 25 is a drawing illustrating an example of a functional structure of a terminal 20 according to an embodiment of the present invention. As shown in Fig. 25, the terminal 20 includes a transmission unit 210, a reception unit 220, a configuration unit 230, and a control unit 240. The functional configuration illustrated in Fig. 25 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the frame structure configuration.

The control unit 240 performs control related to the frame structure configuration as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 24 and Fig. 25) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

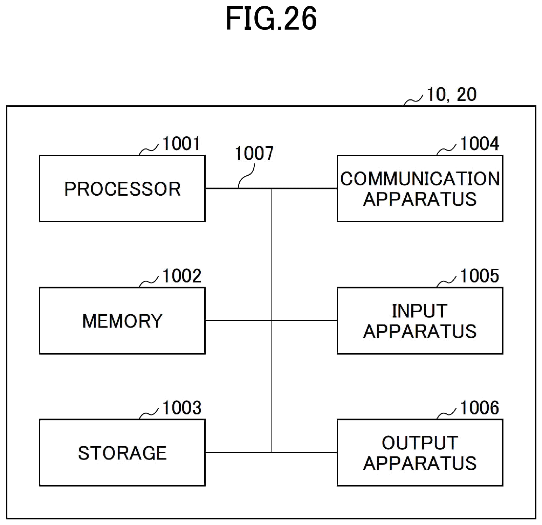

For example, the base station 10, the terminal 20, etc., according to an embodiment of the present disclosure may function as a computer for processing the radio communication method of the present disclosure. Fig. 26 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 or the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 24 may be implemented by control programs that are stored in the memory 1002 and that operate on the processor 1001. In addition, for example, the control unit 240 of the terminal 20 illustrated in Fig. 25 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

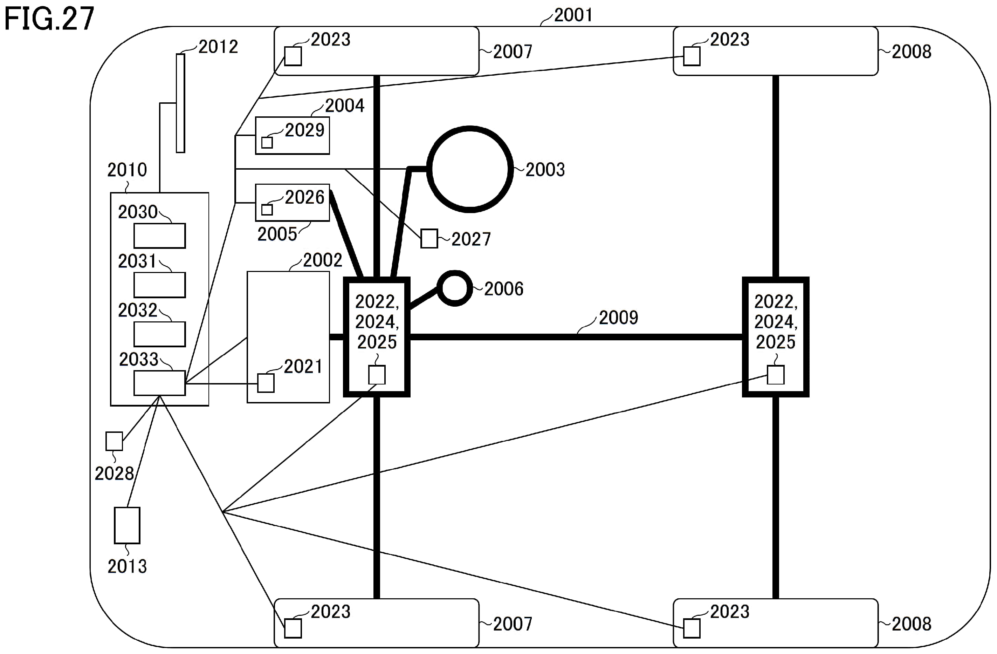

Fig. 27 shows an example of a configuration of a vehicle 2001. As shown in Fig. 27, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a communication device is provided. The communication device includes: a control unit configured to generate a transmission signal of block-wise transmission in which a boundary between symbols of a transmission signal of OFDM (Orthogonal Frequency Division Multiplexing) symbol-wise transmission is aligned with an edge of the transmission signal of the block-wise transmission; and a transmission unit configured to transmit the transmission signal of the block-wise transmission in a frequency band higher than a certain frequency. The control unit includes at least one of a header or a tail in the transmission signal of the block-wise transmission.

According to the above-described configuration, the base station 10 and the terminal 20 can apply a radio frame structure adapted to the next generation wireless communication systems such as sub-terahertz and NTN to communications. In other words, a radio frame structure adapted to the environments related to delay can be used in the wireless communication system.

The control unit may multiplex the transmission signal of the OFDM symbol-wise transmission with the transmission signal of the block-wise transmission at least in a frequency domain or in a time domain. According to the above-described configuration, the terminal 20 can apply an appropriate encoding method to a physical channel depending on a communication condition.

The control unit may include information for scheduling a subsequent block-wise transmission in the tail. According to the above-described configuration, the base station 10 and the terminal 20 can apply a radio frame structure adapted to the next generation wireless communication systems such as sub-terahertz and NTN to communications.

The control unit may include information for scheduling a subsequent block-wise transmission in the transmission signal of the OFDM symbol-wise transmission. According to the above-described configuration, the base station 10 and the terminal 20 can apply a radio frame structure adapted to the next generation wireless communication systems such as sub-terahertz and NTN to communications.

The control unit may include information for scheduling a subsequent block-wise transmission in the transmission signal of the OFDM symbol-wise transmission. According to the above-described configuration, the base station 10 and the terminal 20 can apply a radio frame structure adapted to the next generation wireless communication systems such as sub-terahertz and NTN to communications.

The control unit may apply a waveform other than OFDM to the block-wise transmission. The control unit may change a CP length by changing a slot duration or a number of OFDM symbols per slot. According to the above-described configuration, the base station 10 and the terminal 20 can apply a radio frame structure adapted to the next generation wireless communication systems such as sub-terahertz and NTN to communications.

In addition, according to an embodiment of the present invention, a communication method performed by a communication device is provided. The communication method includes: generating a transmission signal of block-wise transmission in which a boundary between symbols of a transmission signal of OFDM (Orthogonal Frequency Division Multiplexing) symbol-wise transmission is aligned with an edge of the transmission signal of the block-wise transmission; transmitting the transmission of the block-wise transmission in a frequency band higher than a certain frequency; and including at least one of a header or a tail in the transmission signal of the block-wise transmission.

According to the above-described configuration, the base station 10 and the terminal 20 can apply a radio frame structure adapted to the next generation wireless communication systems such as sub-terahertz and NTN to communications. In other words, a radio frame structure adapted to the environments related to delay can be used in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus

## Claims

1. A communication device comprising:
a control unit configured to generate a transmission signal of block-wise transmission in which a boundary between symbols of a transmission signal of OFDM (Orthogonal Frequency Division Multiplexing) symbol-wise transmission is aligned with an edge of the transmission signal of the block-wise transmission; and
a transmission unit configured to transmit the transmission signal of the block-wise transmission in a frequency band higher than a certain frequency, wherein
the control unit includes at least one of a header or a tail in the transmission signal of the block-wise transmission.

2. The communication device as claimed in claim 1, wherein
the control unit multiplexes the transmission signal of the OFDM symbol-wise transmission with the transmission signal of the block-wise transmission at least one of in a frequency domain or in a time domain.

3. The communication device as claimed in claim 1, wherein
the control unit includes information for scheduling a subsequent block-wise transmission in the tail.

4. The communication device as claimed in claim 1, wherein
the control unit includes information for scheduling a subsequent block-wise transmission in the transmission signal of the OFDM symbol-wise transmission.

5. The communication device as claimed in claim 1, wherein
the control unit applies a waveform other than OFDM to the block-wise transmission.

6. A communication method performed by a communication device, the communication method comprising:
generating a transmission signal of block-wise transmission in which a boundary between symbols of a transmission signal of OFDM (Orthogonal Frequency Division Multiplexing) symbol-wise transmission is aligned with an edge of the transmission signal of the block-wise transmission;
transmitting the transmission signal of the block-wise transmission in a frequency band higher than a certain frequency; and
including at least one of a header or a tail in the transmission signal of the block-wise transmission.
